# EUROPÄISCHE PATENTSCHRIFT

(11) **EP 0 578 797 B1**
(45) Veröffentlichungstag und Bekanntmachung des Hinweises auf die Patenterteilung: **22.11.1995**
(21) Anmeldenummer: 93902052.5
(22) Anmeldetag: 26.01.1993
(51) Int. Cl.: B29C 45/14, B29C 33/00, B29C 65/70

(54) **VORRICHTUNG UND VERFAHREN ZUR HERSTELLUNG DER ECKEN VON DICHTUNGSRAHMEN**
PROCESS AND DEVICE FOR MAKING THE CORNERS OF SEALING FRAMES
DISPOSITIF ET PROCEDE DE FABRICATION DE COINS DE CADRES D'ETANCHEITE

(30) Priorität: 28.01.1992 DE 4202225
(43) Veröffentlichungstag der Anmeldung: 19.01.1994
(73) Patentinhaber: PHOENIX AKTIENGESELLSCHAFT, 21079 Hamburg (DE)
(72) Erfinder: GLANG, Siegfried, D-2104 Hamburg 92 (DE); GRABE, Werner, D-2090 Winsen (DE); GUTSCHMIDT, Holger, D-2153 Neu Wulmstorf (DE); LÜDEMANN, Jürgen, D-2100 Hamburg 90 (DE)
(86) Internationale Anmeldenummer: DE9300063
(87) Internationale Veröffentlichungsnummer: WO9314917

(56) Entgegenhaltungen:
- EP-A- 0 255 600
- EP-A- 0 427 383
- FR-A- 1 004 041
- GB-A- 1 431 460
- US-A- 5 069 849

## Beschreibung

Die Erfindung betrifft eine Vorrichtung, bestehend aus einer Innenform, einer Außenform und wenigstens einer in der Außenform angeordneten Injektionsöffnung, die insbesondere innerhalb der Ecke der Außenform in den Formenspalt einmündet; zur Herstellung der Ecken von Dichtungsrahmen, insbesondere Tunnel-Dichtungsrahmen, die zumeist aus vier zusammengesetzten strangförmigen Dichtungsprofilen bestehen (DE-C-28 33 345, GB-B-2 170 561, GB-B-2 178 114, GB-B-2 182 987, EP-B-0 255 600, EP-B-0 306 796, EP-A-0 368 174, EP-B-0 414 137, EP-A-0 441 250), wobei jedes Dichtungsprofil in Längsrichtung verlaufende offene und/oder geschlossene Rillennuten, die an der Profilbasisseite angeordnet sind, sowie zusätzliche, ebenfalls in Längsrichtung verlaufende Kanäle, die sich zwischen den Rillennuten und der Profilrückenfläche befinden, aufweist; wobei die Herstellung der Dichtungsrahmen nach dem Injektion-Molding-Verfahren erfolgt (GB-2 178 114).

Bei der Herstellung der Ecken von Dichtungsrahmen nach dem Injektion-Molding-Verfahren wurden die Kanäle der zugeschnittenen strangförmigen Dichtungsprofile auf beiden Seiten (Stirnflächen) gestöpselt. Auf diese Weise wurde ein Eindringen der Injektionsmasse (Düsmasse) aus vulkanisierbarem Kautschuk in die Profilkanäle verhindert. Mit der Handhabung der Gummi-Stöpsel waren jedoch bislang technische Schwierigkeiten verbunden. Zudem war die Rahmenfertigung wegen der Nichtwiederverwendbarkeit der Gummistöpsel kostenintensiv.

Die Aufgabe der Erfindung besteht nun darin, eine stöpsellose Fertigung von Dichtungsrahmen, insbesondere für Tunnel-Segmente, bereitzustellen. Gelöst wird diese Aufgabe durch eine Vorrichtung mit den kennzeichnenden Merkmalen des Anspruchs 1 oder 2.

Zweckmäßige Ausgestaltungen der beiden Vorrichtungsvarianten I und II sind in den Unteransprüchen 3 bis 9 genannt. Auf zweckmäßige Verfahren zur Rahmenfertigung gehen die Unteransprüche 10 bis 12 ein, während die Unteransprüche 13 und 14 den bevorzugten Anwendungsbereich beinhalten.

Die Erfindung wird nun anhand von Ausführungsbeispielen unter Bezugnahme auf schematische Zeichnungen näher erläutert. Es zeigen:
- Fig. 1: einen Dichtungsrahmen;
- Fig. 2,8: ein Dichtungsprofil im Querschnitt gesehen (Schnittlinie A-B, Fig. 1);
- Fig. 3: die Grundausrüstung der Vorrichtung;
- Fig. 4: einen Formeinsatz mit Stegen und Stiften;
- Fig. 5: die Innenform mit einem Formeinsatz gemäß Fig. 4;
- Fig. 6: eine Rahmenecken nach der Entformung;
- Fig. 7: die Innenform mit einem Formeinsatz, der Widerhaken aufweist.

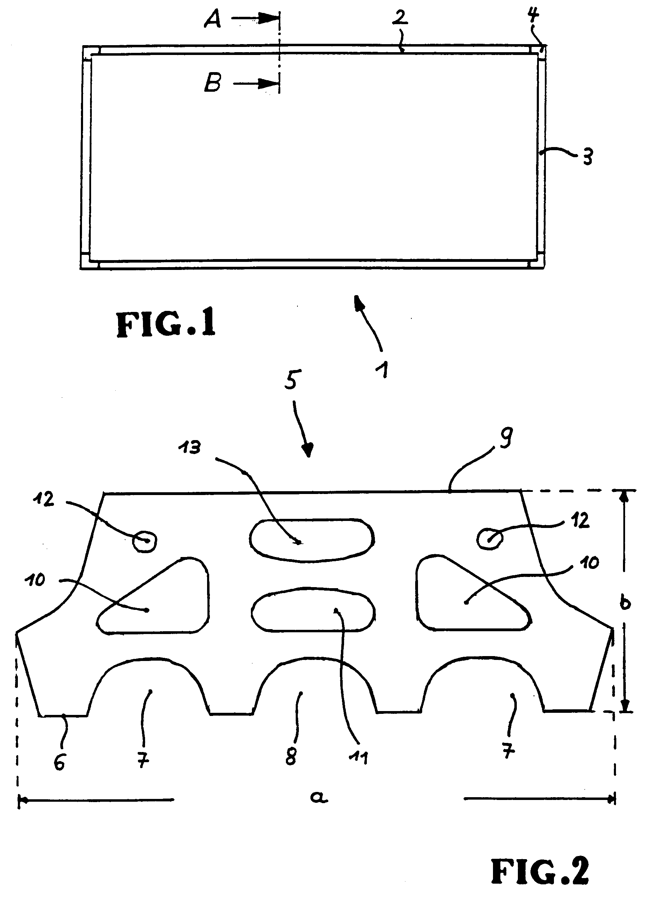

Fig. 1 zeigt einen Dichtungsrahmen (1), der aus vier zusammengesetzten strangförmigen Dichtungsprofilen (2, 3) aus elastomerem Werkstoff, d.h. aus Gummi oder gummiähnlichem Material, besteht, wobei die Ecken (4) dieses Dichtungsrahmens nach dem Injektion-Molding-Verfahren hergestellt werden.

Fig. 2 zeigt nun den Querschnitt eines Dichtungsprofils (5) längs der Schnittlinie A-B gemäß Fig. 1. Dabei sind an der Basisfläche (6) drei in Längsrichtung verlaufende offene Rillennuten (7, 8) vorhanden. Zwischen diesen Rillennuten und der Profilrückenfläche (9) befinden sich sechs zusätzliche, ebenfalls in Längsrichtung verlaufende Kanäle (10, 11, 12, 13), die zweireihig angeordnet sind und sich dabei direkt (d.h. ohne Versatz) über den drei Rillennuten befinden. Die Kanäle haben zum Teil unterschiedliche Querschnittsflächen bzw. Durchmesser. Bei einer Profilbreite a von etwa 32 mm und einer Profilhöhe b von etwa 12 mm - im Tunnelbau übliche Profildimensionen im unbelasteten Zustand - weisen die drei unmittelbar über den Rillennuten (7, 8) angeordneten Kanäle (10, 11) mit trapez- bzw. ovalförmiger Querschnittsgestalt sowie der mittige, im Querschnitt gesehen ovalförmige Kanal (13) der der Profilbasisfläche (9) zugewandten Reihe jeweils einen durchschnittlichen Durchmesser von > 2 mm auf, während die beiden Außenkanäle (12), die im Querschnitt gesehen kreisförmig sind, einen Durchmesser von < 2 mm besitzen.

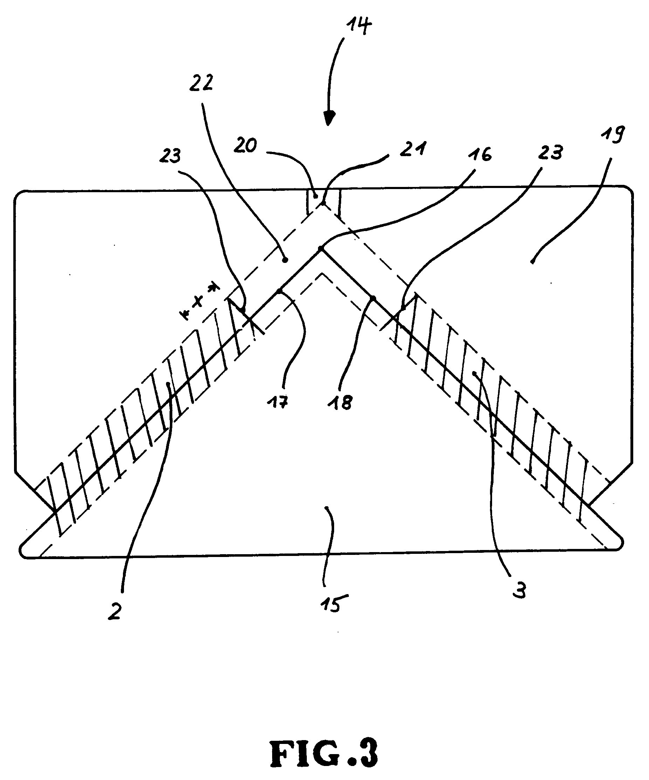

Nach Fig. 3 besteht die Vorrichtung (14) aus der Innenform (15) mit der Ecke (16) und den beiden Seiten (17, 18) sowie aus der Außenform (19), wobei die Außenform eine Injektionsöffnung (20) besitzt, die innerhalb der Ecke (21) dieser Außenform in den Formenspalt (22) einmündet. Zwischen der Innenform (15) und der Außenform (19) befinden sich nun in entsprechenden Formenaussparungen (gestrichelte Linien) zwei strangförmige Dichtungsprofile (2, 3) bzw. (5 - Fig. 2), die nun über die Rahmenecke (4 - Fig. 1) - auch Düsecke genannt - miteinander verbunden werden. Dabei ist es nun wichtig, daß alle oder wenigstens ein Teil der Kanäle (10, 11, 12, 13 - Fig. 2) während des Injektion-Molding-Verfahrens unmittelbar an der Profilstirnfläche (23) bzw. innerhalb des Profilendbereiches X verschlossen werden. Hierzu werden erfindungsgemäß zwei Vorrichtungsvarianten vorgeschlagen.

### Vorrichtungsvariante I

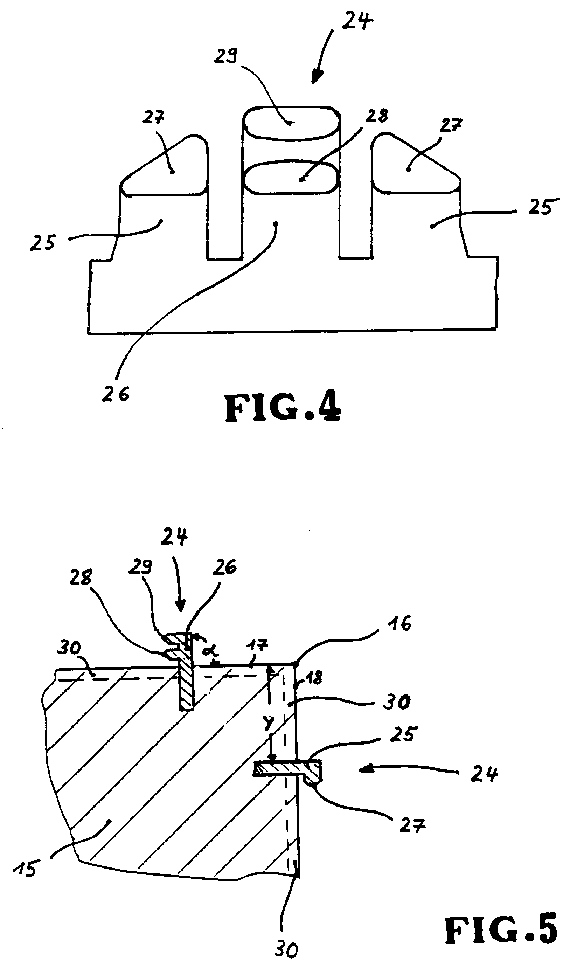

Fig. 4 zeigt nun einen Formeinsatz (24), der drei Stege (25, 26) sowie vier Stifte (27, 28, 29) besitzt. In ihrer Querschnittsform sind dabei die Stifte, die zweckmäßigerweise konisch ausgebildet sind und eine Länge von 3 bis 5 mm aufweisen, den vier Kanälen (10, 11, 13 - Fig. 2) angepaßt. Zusätzliche Stifte für die beiden querschnittskleinen Außenkanäle (12 - Fig. 2) sind hier nicht vorhanden und auch nicht urbedingt erforderlich.

Nach Fig. 5 ist nun die Innenform (15) von der Ecke (16) aus gesehen zu beiden Seiten (17, 18) hin mit zusätzlichen Formeinsätzen (24) versehen. Dabei ist hier zwecks besseren Verständnisses innerhalb der Formseite (17) der Innensteg (26) mit den Stiften (28, 29) dargestellt, während die Formseite (18) die beiden Außenstege (25) mit den Stiften (27) aufzeigt.

Sämtliche Stifte verlaufen in entgegengesetzter Richtung zur Ecke (16), wobei die Formeinsätze (24) zu dieser Ecke zweckmäßigerweise einen Mindestabstand Y von 20 mm haben. Die Stege (25, 26) weisen ferner zweckmäßigerweise einen Winkel α von 45 bis 90° auf, und zwar bezogen auf die Seite (17, 18) der Innenform (15), wobei bei einem Winkel α von < 90° die Erstreckungsrichtung zur Ecke (16) der Innenform hin verläuft.

In die Formenaussparung (30), die sich über die Ecke (16) der Innenform (15) erstreckt und eine der Basisfläche (6 - Fig. 2) des Dichtungsprofils angepaßte Rillenstruktur aufweist, werden die beiden strangförmigen Dichtungsprofile (2, 3 - Fig. 1; 5 - Fig. 2) eingesetzt und dabei soweit aufgezogen, bis die Stifte (27, 28, 29) an der Profilstirnfläche (23 - Fig. 3) die vier Kanäle (10, 11, 13 - Fig. 2) verschließen. Die Formeinsätze (24) haben hier also die Bedeutung von Anschlägen. Danach wird die Außenform (19 - Fig. 3) aufgebracht (Verschließen der Vorrichtung). In den verbleibenden Formenspalt (22 - Fig. 3) wird über die Injektionsöffnung (20) die Kautschukmischung eingespritzt bzw. eingedüst. Mittels heizbarer Formpressen (hier nicht dargestellt) wird nun die Rahmenecke vulkanisiert. Anschließend wird die Vorrichtung geöffnet und die Ecke entformt.

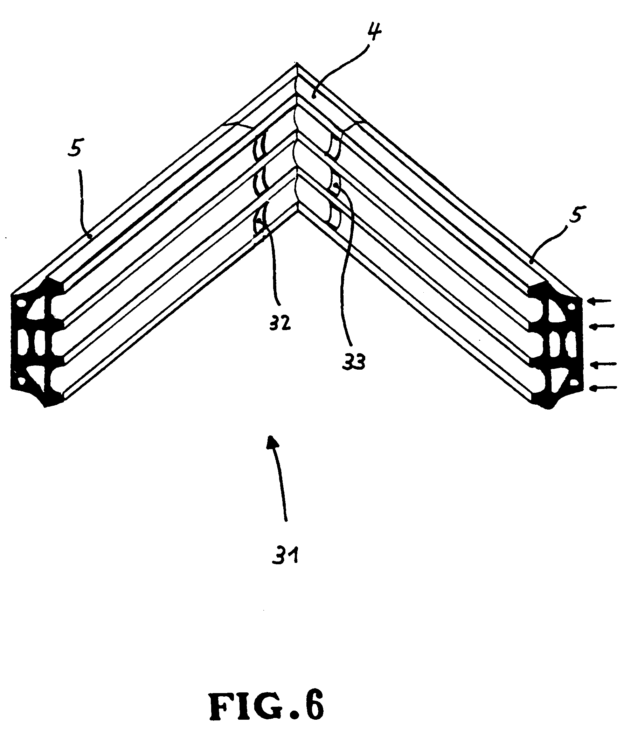

Fig. 6 zeigt nun die Innenseite (31) der fertiggestellten Rahmen- bzw. Düsecke (4) mit den angrenzenden Dichtungsprofilen (5). Wie aus dieser Fig. ersichtlich ist, verbleiben nach der Entformung innerhalb des Eckbereiches Öffnungen (32, 33), die durch die Stege (25, 26) des Formeinsatzes (24 - Fig. 4, 5) gebildet wurden. Da sich diese Öffnungen innerhalb der Rillennuten (7, 8) befinden, haben diese keine nachteilige Auswirkung auf die Dichtigkeit, da die linearen Bereiche (Pfeilrichtung) entscheidend für die Dichtigkeit des Elastomerprofiles sind.

### Vorrichtungsvariante II

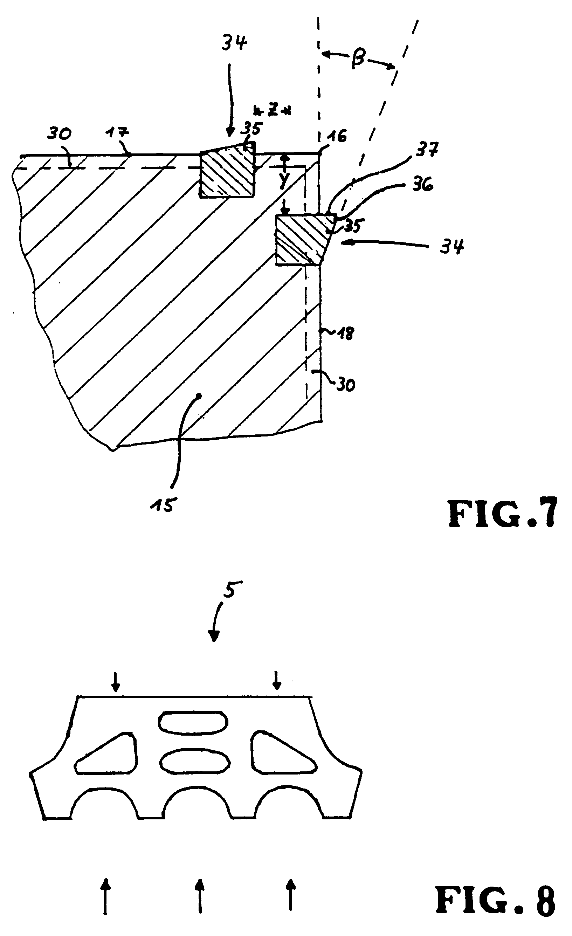

Nach Fig. 7 besitzt die Innenform (15) von der Ecke (16) aus gesehen zu beiden Seiten (17, 18) hin ebenfalls zusätzliche Formeinsätze (34), die hier entsprechend der Anzahl der Rillennuten des Dichtungsprofiles (5 - Fig. 2, 8) jeweils drei Widerhaken (35) aufweisen, die zweckmäßigerweise als Rampen ausgebildet sind, die zur Ecke (16) der Innenform (15) hin ansteigen, wobei der Winkel β dieser rampenförmigen Widerhaken 5 bis 30°, insbesondere 10 bis 20°, beträgt, und zwar bezogen auf die Seite (17, 18) der Innenform (15). Im Bereich ihrer höchsten Erhebung (bezogen auf die Seite 17, 18) können diese rampenförmigen Widerhaken gegebenenfalls parallel (Ebene 26) zu der Seite (17, 18) auslaufen. Der Mindestabstand Y der Formeinsätze beträgt hier ebenfalls 20 mm.

In die Formenaussparung (20) werden nun wie bei der Vorrichtungsvariante I die beiden strangförmigen Dichtungsprofile eingesetzt. Dabei werden allerdings die Profile nun soweit auf die Innenform (15) aufgezogen, daß die Profilstirnfläche (23 - Fig. 3) wenigstens fluchtend mit der der Ecke (16) der Innenform zugewandte Seite (37) des Widerhakens (35), insbesondere in einem überstand Z bis zu 5 mm, zu liegen kommt. Danach wird die Außenform aufgebracht, wobei im Profilendbereich X (Fig. 3) alle oder wenigstens ein Teil der Kanäle - hier insbesondere die Kanäle (10, 11, 13 - Fig. 2, 8) - durch Verpressen (unter Druckeinwirkung) verschlossen werden. Hinsichtlich der weiteren Verfahrensschritte wird auf die Beschreibung der Vorrichtungsvariante I verwiesen.

Anhand der Fig. 8, die nochmals den Querschnitt des Dichtungsprofiles (5) aufzeigt, wird nun die Wirkungsweise der Widerhaken (35 - Fig. 7) beschrieben. Während des Injektion-Molding-Verfahrens pressen die drei Widerhaken in Verbindung mit der Außenform (19 - Fig. 3) unter Druckeinwirkung (Pfeilrichtung) die Kanäle zusammen.

In den meisten Fällen sind - wie an dem Ausführungsbeispiel (Fig: 2, 6, 8) gezeigt - die Rillennuten offen. Bei einem Einsatz von Dichtungsprofilen, bei denen die Rillennuten ganz oder teilweise geschlossen sind, kommt bei der Herstellung der Rahmenecken bevorzugt die Vorrichtungsvariante I zur Anwendung. Die geschlossenen Rillennuten werden dann wie die Kanäle mittels entsprechender zusätzlicher Stifte während des Injektion-Molding-Verfahrens geschlossen, insbesondere dann, wenn der durchschnittliche Durchmesser ≧ 2 mm beträgt.

## Patentansprüche

1. Vorrichtung, bestehend aus
- einer Innenform (15),
- einer Außenform (19) und
- wenigstens einer in der Außenform angeordneten Injektionsöffnung (20), die insbesondere innerhalb der Ecke (21) der Außenform in den Formenspalt (22) einmündet;
- zur Herstellung der Ecken (4) von Dichtungsrahmen (1), insbesondere Tunnel-Dichtungsrahmen, die zumeist aus vier zusammengesetzten strangförmigen Dichtungsprofilen (2, 3, 5) aus elastomerem Werkstoff bestehen, wobei jedes Dichtungsprofil in Längsrichtung verlaufende offene und/oder geschlossene Rillennuten (7, 8), die an der Profilbasisseite (6) angeordnet sind, sowie zusätzliche, ebenfalls in Längsrichtung verlaufende Kanäle (10, 11, 12, 13), die sich zwischen den Rillennuten und der Profilrückenfläche (9) befinden, aufweist; wobei
- die Herstellung der Ecken der Dichtungsrahmen nach dem Injektion-Molding-Verfahren erfolgt;
dadurch gekennzeichnet, daß
- die Innenform (15) von der Ecke (16) aus gesehen zu beiden Seiten (17, 18) hin mit zusätzlichen Formeinsätzen (24) als Anschläge für die Dichtungsprofile versehen ist, wobei die Formeinsätze Stege (25, 26) und Stifte (27, 28, 29) aufweisen, wobei wiederum die Stifte in entgegengesetzter Richtung zur Ecke (16) der Innenform verlaufen und während der Herstellung der Rahmenecken an der Profilstirnfläche (23) alle oder wenigstens einen Teil der Kanäle (10, 11, 12, 13) verschließen (Vorrichtungsvariante I).

2. Vorrichtung, bestehend aus
- einer Innenform (15),
- einer Außenform (19) und
- wenigstens einer in der Außenform angeordneten Injektionsöffnung (20), die insbesondere innerhalb der Ecke (21) der Außenform in den Formenspalt (22) einmündet;
- zur Herstellung der Ecken (4) von Dichtungsrahmen (1), insbesondere Tunnel-Dichtungsrahmen, die zumeist aus vier zusammengesetzten strangförmigen Dichtungsprofilen (2, 3, 5) aus elastomerem Werkstoff bestehen, wobei jedes Dichtungsprofil in Längsrichtung verlaufende offene und/oder geschlossene Rillennuten (7, 8), die an der Profilbasisseite (6) angeordnet sind, sowie zusätzliche, ebenfalls in Längsrichtung verlaufende Kanäle (10, 11, 12, 13), die sich zwischen den Rillennuten und der Profilrückenfläche (9) befinden, aufweist; wobei
- die Herstellung der Ecken der Dichtungsrahmen nach dem Injektion-Molding-Verfahren erfolgt;
dadurch gekennzeichnet, daß
- die Innenform (15) von der Ecke (16) aus gesehen zu beiden Seiten (17, 18) hin mit zusätzlichen Formeinsätzen (34) versehen ist, die Widerhaken (35) besitzen, die während der Herstellung der Rahmenecken im Profilendbereich X alle oder wenigstens einen Teil der Kanäle (10, 11, 12, 13) durch Verpressen verschließen (Vorrichtungsvariante II).

3. Vorrichtung nach Anspruch 1 oder 2, dadurch gekennzeichnet, daß die zusätzlichen Formeinsätze (24, 34) zu der Ecke (16) der Innenform (15) einen Mindestabstand Y von 20 mm aufweisen.

4. Vorrichtung nach Anspruch 1 oder 3, dadurch gekennzeichnet, daß die Stifte (27, 28, 29) konisch ausgebildet sind.

5. Vorrichtung nach Anspruch 1, 3 oder 4, dadurch gekennzeichnet, daß die Länge der Stifte (27, 28, 29) 3 bis 5 mm beträgt.

6. Vorrichtung nach einem der Ansprüche 1, 3, 4 oder 5, dadurch gekennzeichnet, daß mittels der Stifte (27, 28, 29) lediglich diejenigen Kanäle verschlossen werden, deren durchschnittlicher Durchmesser ≧ 2 mm beträgt.

7. Vorrichtung nach einem der Ansprüche 1, 3, 4, 5 oder 6, dadurch gekennzeichnet, daß die Stege (25, 26) einen Winkel α von 45 bis 90° aufweisen, und zwar bezogen auf die Seite (17, 18) der Innenform (15), wobei bei einem Winkel α von < 90° die Erstreckungsrichtung zur Ecke (16) der Innenform hin verläuft.

8. Vorrichtung nach Anspruch 2 oder 3, dadurch gekennzeichnet, daß die Widerhaken (35) als Rampen ausgebildet sind, die zur Ecke (16) der Innenform (15) hin ansteigen, wobei die rampenförmigen Widerhaken gegebenenfalls parallel (Ebene 36) zu der Seite (17, 18) auslaufen.

9. Vorrichtung nach Anspruch 8, dadurch gekennzeichnet, daß der Winkel β der rampenförmigen Widerhaken (35) 5 bis 30°, insbesondere 10 bis 20°, beträgt, und zwar bezogen auf die Seite (17, 18) der Innenform (15).

10. Verfahren zur Herstellung der Ecken von Dichtungsrahmen (1), insbesondere von Tunnel-Dichtungsrahmen, unter Einsatz einer Vorrichtungsvariante I nach einem der Ansprüche 1, 3, 4, 5, 6 oder 7, gekennzeichnet durch folgende Verfahrensschritte:
- die Dichtungsprofile (2, 3, 5) werden soweit auf die Innenform (15) aufgezogen, bis die Stifte (27, 28, 29) an der Profilstirnfläche (23) alle oder wenigstens einen Teil der Kanäle (10, 11, 12, 13) verschließen;
- danach wird die Außenform (19) aufgebracht (Verschließen der Vorrichtung);
- in den verbleibenden Formenspalt (22) wird über die Injektionsöffnung (20) die Kautschukmischung eingebracht;
- mittels heizbarer Formpressen wird die Rahmenecke (4) vulkanisiert;
- anschließend wird die Vorrichtung entformt.

11. Verfahren zur Herstellung der Ecken von Dichtungsrahmen (1), insbesondere von Tunnel-Dichtungsrahmen, unter Einsatz einer Vorrichtungsvariante II nach einem der Ansprüche 2, 3, 8 oder 9, gekennzeichnet durch folgende Verfahrensschritte:
- die Dichtungsprofile (2, 3, 5) werden soweit auf die Innenform (15) aufgezogen, daß die Profilstirnfläche (23) wenigstens fluchtend mit der der Ecke (16) der Innenform zugewandten Seite (37) des Widerhakens (35), insbesondere in einem überstand Z, zu liegen kommt;
- danach wird die Außenform (19) aufgebracht (Verschließen der Vorrichtung), wobei im Profilendbereich X alle oder wenigstens ein Teil der Kanäle (10, 11, 12, 13) mittels der Widerhaken (35) und der Außenform (19) (unter Druckeinwirkung) verschlossen werden;
- in den verbleibenden Formenspalt (22) wird über die Injektionsöffnung (20) die Kautschukmischung eingebracht;
- mittels heizbarer Formpressen wird die Rahmenecke (4) vulkanisiert;
- anschließend wird die Vorrichtung entformt.

12. Verfahren nach Anspruch 11, dadurch gekennzeichnet, daß der überstand Z bis zu 5 mm beträgt.

13. Verwendung einer Vorrichtung bzw. Verfahrens zur Herstellung der Ecken von Dichtungsrahmen (1), insbesondere von Tunnel-Dichtungsrahmen, nach einem der Ansprüche 1 bis 12, wobei die Kanäle (10, 11, 12, 13) der Dichtungsprofile (2, 3, 5) direkt (d.h. ohne Versatz) über den offenen und/oder geschlossenen Rillennuten (7, 8) angeordnet sind.

14. Verwendung einer Vorrichtung bzw. Verfahrens zur Herstellung der Ecken von Dichtungsrahmen (1), insbesondere von Tunnel-Dichtungsrahmen, nach Anspruch 13, wobei die Kanäle (10, 11, 12, 13) der Dichtungsprofile (2, 3, 5) mehrreihig, insbesondere zweireihig, angeordnet sind.

## Claims

1. A device, consisting of:
- an inner mould (15);
- an outer mould (19); and
- at least one injection opening (20) which is arranged in the outer mould and emerges into the mould gap (22) in particular inside the corner (21) of the outer mould;
- for the production of the corners (4) of sealing frames (1), especially tunnel sealing frames, which in most cases consist of four sealing profiles (2, 3, 5) of elastomeric material in the form of strands put together, each sealing profile exhibiting open and/or closed grooves (7, 8) running in the longitudinal direction and arranged on the side (6) of the profile at the base, as well as additional channels (10, 11, 12, 13) which likewise run in the longitudinal direction and lie between the grooves and the rear face (9) of the profile;
- the production of the corners of the sealing frames being effected according to the injection-moulding method;
characterized in that
- the inner mould (15), looking from the corner (16) towards both sides (17, 18), is provided with additional mould inserts (24) as stops for the sealing profiles, the mould inserts exhibiting webs (25, 26) and pins (27, 28, 29), the pins again running in the direction away from the corner (16) of the inner mould and during the production of the frame corners closing off at the endface (23) of the profile all or at least some of the channels (10, 11, 12, 13) (Variant I of the device).

2. A device, consisting of:
- an inner mould (15);
- an outer mould (19); and
- at least one injection opening (20) which is arranged in the outer mould and emerges into the mould gap (22) in particular inside the corner (21) of the outer mould;
- for the production of the corners (4) of sealing frames (1), especially tunnel sealing frames, which in most cases consist of four sealing profiles (2, 3, 5) of elastomeric material in the form of strands put together, each sealing profile exhibiting open and/or closed grooves (7, 8) running in the longitudinal direction and arranged on the side (6) of the profile at the base, as well as additional channels (10, 11, 12, 13) which likewise run in the longitudinal direction and lie between the grooves and the rear face (9) of the profile;
- the production of the corners of the sealing frames being effected according to the injection-moulding method;
characterized in that
- the inner mould (15), looking from the corner (16) towards both sides (17, 18), is provided with additional mould inserts (34) which have barbs (35) which during the production of the frame corners close off in the end region X of the profile all or at least some of the channels (10, 11, 12, 13) by pressure. (Variant II of the device).

3. A device as in Claim 1 or 2, characterized in that the additional mould inserts (24, 34) exhibit a minimum distance Y of 20 mm from the corner (16) of the inner mould (15).

4. A device as in Claim 1 or 3, characterized in that the pins (27, 28, 29) are made conical.

5. A device as in Claim 1, 3 or 4, characterized in that the length of the pins (27, 28, 29) amounts to 3 to 5 mm.

6. A device as in one of the Claims 1, 3, 4 or 5, characterized in that the channels closed by means of the pins (27, 28, 29) are merely those of which the average diameter amounts to ≧ 2 mm.

7. A device as in one of the Claims 1, 3, 4, 5 or 6, characterized in that the webs (25, 26) exhibit an angle α of from 45 to 90°, that is, referred to the side (17, 18) of the inner mould (15), in which case at an angle α of < 90° the direction of extension runs towards the corner (16) of the inner mould.

8. A device as in Claim 2 or 3, characterized in that the barbs (35) are made as ramps which rise towards the corner (16) of the inner mould (15), the barbs in the form of ramps running out if necessary in parallel (plane 36) with the side (17, 18).

9. A device as in Claim 8, characterized in that the angle β of the barbs (35) in the form of ramps amounts to from 5 to 30°, in particular 10 to 20°, that is, referred to the side (17, 18) of the inner mould (15).

10. A method of production of the corners of sealing frames (1), especially tunnel sealing frames, by using a Variant I of the device, according to one of the Claims 1, 3, 4, 5, 6 or 7, characterized by the following steps of the method:
- the sealing profiles (2, 3, 5) are pulled up onto the inner mould (15) until the pins (27, 28, 29) close off against the endface (23) of the profile all or at least some of the channels (10, 11, 12, 13);
- then the outer mould (19) is fitted (closing the device);
- the rubber mixture is introduced via the injection opening (20) into the mould gap (22) which remains;
- the frame corners (4) are vulcanized by means of heatable mould presses;
- the device is then removed from the mould.

11. A method of production of the corners of sealing frames (1), especially tunnel sealing frames, by using a Variant II of the device, according to one of the Claims 2, 3, 8 or 9, characterized by the following steps of the method:
- the sealing profiles (2, 3, 5) are pulled up onto the inner mould (15) until the endface (23) of the profile comes to lie at least flush with that side (37) of the barb (35) which is next the corner (16) of the inner mould, or especially overhanging by a distance Z;
- then the outer mould (19) is fitted (closing the device), all or at least some of the channels (10, 11, 12, 13) becoming closed off by means of the barbs (35) and the outer mould (19) (under the influence of pressure);
- the rubber mixture is introduced via the injection opening (20) into the mould gap (22) which remains;
- the frame corners (4) are vulcanized by means of heatable mould presses;
- the device is then removed from the mould.

12. A method as in Claim 11, characterized in that the overhang Z amounts to up to 5 mm.

13. Use of a device or method of production of the corners of sealing frames (1), especially tunnel sealing frames, as in one of the Claims 1 to 12, in which the channels (10, 11, 12, 13) of the sealing profiles (2, 3, 5) are arranged directly (i.e., without any offset) above the open and/or closed grooves (7, 8).

14. Use as in Claim 13, of a device or method of production of the corners of sealing frames (1), especially tunnel sealing frames, in which the channels (10, 11, 12, 13) of the sealing profiles (2, 3, 5) are arranged in a number of rows, especially two rows.

## Revendications

1. Dispositif, se composant
- d'un moule intérieur (15),
- d'un moule extérieur (19) et
- d'au moins un orifice d'injection (20) qui est disposé dans le moule extérieur et qui débouche dans la fente de moulage (22), en particulier en dedans du coin (21) du moule extérieur;
- pour la fabrication des coins (4) de cadres d'étanchéité (1), en particulier de cadres d'étanchéité pour tunnels, qui sont constitués le plus souvent par l'assemblage de quatre joints d'étanchéité profilés en forme de cordon (2,3,5) en matière élastomère, chaque joint d'étanchéité profilé présentant des rainures ouvertes et/ou fermées (7,8) qui s'étendent en direction longitudinale et qui sont situées sur le côté de base (6) du profilé, ainsi que des canaux supplémentaires (10,11,12,13) qui s'étendent également en direction longitudinale et qui se trouvent entre les rainures et le dos (9) du profilé;
- la fabrication des coins des cadres d'étanchéité étant effectuée par le procédé de moulage par injection;
caractérisé en ce que
- le moule intérieur (15), vu à partir de son coin (16) vers ses deux côtés (17,18), est muni de pièces rapportées supplémentaires (24) servant de butées pour les joints d'étanchéité profilés, ces pièces rapportées comportant des barrettes (25,26) et des becs (27,28,29), les becs s'étendant en direction opposée par rapport au coin (16) du moule intérieur et obturant la totalité ou au moins une partie des canaux (10,11,12,13) au niveau de la surface d'extrémité (23) du profilé pendant la fabrication des coins du cadre (variante I du dispositif).

2. Dispositif, se composant
- d'un moule intérieur (15),
- d'un moule extérieur (19) et
- d'au moins un orifice d'injection (20) qui est disposé dans le moule extérieur et qui débouche dans la fente de moulage (22), en particulier en dedans du coin (21) du moule extérieur;
- pour la fabrication des coins (4) de cadres d'étanchéité (1), en particulier de cadres d'étanchéité pour tunnels, qui sont constitués le plus souvent par l'assemblage de quatre joints d'étanchéité profilés en forme de cordon (2,3,5) en matière élastomère, chaque joint d'étanchéité profilé présentant des rainures ouvertes et/ou fermées (7,8) qui s'étendent en direction longitudinale et qui sont situées sur le côté de base (6) du profilé, ainsi que des canaux supplémentaires (10,11,12,13) qui s'étendent également en direction longitudinale et qui se trouvent entre les rainures et le dos (9) du profilé;
- la fabrication des coins des cadres d'étanchéité étant effectuée par le procédé de moulage par injection;
caractérisé en ce que
- le moule intérieur (15), vu a partir de son coin (16) vers ses deux côtés (17,18), est muni de pièces rapportées supplémentaires (34) comportant des barbes (35) qui, pendant la fabrication des coins du cadre, obturent par compression, dans la partie terminale (X) des profilés, la totalité ou au moins une partie des canaux (10,11,12,13) (variante II du dispositif).

3. Dispositif selon la revendication 1 ou 2, caractérisé en ce que les pièces rapportées supplémentaires (24,34) sont à une distance minimale (Y) de 20 mm du coin (16) du moule intérieur (15).

4. Dispositif selon la revendication 1 ou 3, caractérisé en ce que les becs (27,28,29) sont réalisés sous forme conique.

5. Dispositif selon la revendication 1, 3 ou 4, caractérisé en ce que la longueur des becs (27,28,29) est comprise entre 3 et 5 mm.

6. Dispositif selon l'une quelconque des revendications 1, 3, 4 ou 5, caractérisé en ce qu'il est seulement obturé, au moyen des becs (27,28,29), les canaux dont le diamètre moyen est égal ou supérieur à 2 mm.

7. Dispositif selon l'une quelconque des revendications 1, 3, 4, 5 ou 6, caractérisé en ce que les barrettes (25,26) forment un angle α de 45 a 90° par rapport aux côtés (17,18) du moule intérieur (15), la direction dans laquelle elles s'étendent en cas d'angle α < 90° étant vers le coin (16) du moule intérieur.

8. Dispositif selon la revendication 2 ou 3, caractérisé en ce que les barbes (35) sont réalisées sous forme de rampes qui montent en direction du coin (16) du moule intérieur (15), les barbes en forme de rampe se terminant éventuellement parallèlement (plan 36) au côté (17,18).

9. Dispositif selon la revendication 8, caractérisé en ce que l'angle β des barbes en forme de rampe (35) est compris entre 5 et 30°, en particulier entre 10 et 20°, par rapport au côté (17,18) du moule intérieur (15).

10. Procédé de fabrication des coins de cadres d'étanchéité (1), en particulier de cadres d'étanchéité pour tunnels, avec utilisation d'une variante I de dispositif selon l'une quelconque des revendications 1, 3, 4, 5, 6 ou 7, caractérisé par les phases opératoires suivantes:
- les joints d'étanchéité profilés (2,3,5) sont tendus sur le moule intérieur (15) jusqu'à ce que les becs (27,28,29) obturent, au niveau de la face d'extrémité (23) du profilé, la totalité ou au moins une partie des canaux (10,11,12,13);
- après quoi, le moule extérieur (19) est mis en place (fermeture du dispositif);
- le mélange de caoutchouc est chargé par l'orifice d'injection (20) dans la fente de moulage (22) qui subsiste;
- le coin (4) du cadre est vulcanisé au moyen de presses a mouler chauffables;
- le dispositif est ensuite démoulé.

11. Procédé de fabrication des coins de cadres d'étanchéité (1), en particulier de cadres d'étanchéité pour tunnels, avec utilisation d'une variante II de dispositif selon l'une quelconque des revendications 2, 3, 8 ou 9, caractérisé par les phases opératoires suivantes:
- les joints d'étanchéité profilés (2,3,5) sont tendus sur le moule intérieur (15) jusqu'à ce que la face d'extrémité (23) du profilé vienne se placer au moins dans l'alignement du côté (37) de la barbe (35) qui est dirigé vers le coin (16) du moule intérieur, en particulier avec un dépassement (Z);
- après quoi, le moule extérieur (19) est mis en place (fermeture du dispositif), la totalité ou au moins une partie des canaux (10,11,12,13) étant obturée (sous l'effet de la compression), dans la partie (X) du profilé, au moyen des barbes (35) et du moule extérieur (19);
- le mélange de caoutchouc est chargé par l'orifice d'injection (20) dans la fente de moulage (22) qui subsiste;
- le coin (4) du cadre est vulcanisé au moyen de presses à mouler chauffables;
- le dispositif est ensuite démoulé.

12. Procédé selon la revendication 11, caractérisé en ce que le dépassement (Z) mesure jusqu'à 5 mm.

13. Utilisation d'un dispositif ou application d'un procédé pour la fabrication des coins de cadres d'étanchéité (1), en particulier de cadres d'étanchéité pour tunnels, selon l'une quelconque des revendications 1 à 12, les canaux (10,11,12,13) des joints d'étanchéité profilés (2,3,5) étant disposés directement (c'est-à-dire sans décalage) au-dessus des rainures ouvertes et/ou fermées (7,8).

14. Utilisation d'un dispositif ou application d'un procédé pour la fabrication des coins de cadres d'étanchéité (1), en particulier de cadres d'étanchéité pour tunnels, selon la revendication 13, les canaux (10,11,12,13) des joints d'étanchéité profilés (2,3,5) étant disposés en plusieurs rangées, en particulier en deux rangées.
